# FASCICULE DE BREVET EUROPEEN

(11) **EP 3 586 111 B1**
(45) Date de publication et mention de la délivrance du brevet: **26.02.2025**
(21) Numéro de dépôt: 18718601.0
(22) Date de dépôt: 29.03.2018
(51) Int. Cl.: G01N 23/20033

(54) **DISPOSITIF, SYSTÈME ET PROCÉDÉ POUR L'ANALYSE PAR DIFFRACTION DE RAYONS X D'UNE ÉLECTRODE D'UNE CELLULE ÉLECTROCHIMIQUE, EN TEMPÉRATURE ET SOUS COURANT**
VORRICHTUNG, SYSTEM UND VERFAHREN ZUR RÖNTGENBEUGUNGSANALYSE EINER ELEKTRODE EINER ELEKTROCHEMISCHEN ZELLE BEI BETRIEBSTEMPERATUR UND UNTER STROM
DEVICE, SYSTEM AND METHOD FOR X-RAY DIFFRACTION ANALYSIS OF AN ELECTRODE OF AN ELECTROCHEMICAL CELL, AT OPERATING TEMPERATURE AND UNDER CURRENT

(30) Priorité: 31.03.2017 FR 1752782
(43) Date de publication de la demande: 01.01.2020
(73) Titulaire: Commissariat à l'Energie Atomique et aux Energies Alternatives, 75015 Paris (FR); Université de Tours, 37000 Tours (FR)
(72) Inventeur: VULLIET, Julien, 37170 Chambray-Les-Tours (FR); AUTRET, Cécile, 37800 Saint-Epain (FR); HONSTETTRE, Christophe, 37320 Esvres-Sur-Indre (FR)
(74) Mandataire: Brevalex
(86) Numéro de dépôt international: PCT/FR2018/050782
(87) Numéro de publication internationale: WO 2018/178583

(56) Documents cités:
- FR-A1- 3 030 892
- JP-A- 2016 066 581
- JP-A- 2016 162 587
- JP-A- 2017 016 872
- US-A- 5 848 122
- US-A1- 2016 285 122

## Description

### DOMAINE TECHNIQUE

La présente invention concerne le domaine des piles à combustibles à oxyde solide (SOFC, acronyme anglais pour « Solid Oxid Fuel Cell ») et celui de l'électrolyse de l'eau à haute température (soit EHT ou EVHT pour « Electrolyse de la Vapeur d'eau à Haute Température » (correspondant respectivement aux acronymes anglais HTE et HTSE)).

L'invention se rapporte plus particulièrement à l'étude des électrodes des cellules électrochimiques à oxydes solides (SOC) fonctionnant à haute température utilisées dans les piles SOFC et les électrolyseurs EHT. Elle permet en particulier d'étudier le comportement d'une électrode d'une cellule électrochimique SOC en fonctionnement, c'est-à-dire dans des conditions réelles de température et de courant, dans le but de mieux connaître le fonctionnement de piles SOFC et d'électrolyseurs EHT.

### ÉTAT DE LA TECHNIQUE ANTÉRIEURE

Les piles SOFC et les électrolyseurs EHT sont formés d'une pluralité de cellules électrochimiques élémentaires à oxydes solides (SOC) qui sont empilées et sont raccordées électriquement en série au moyen de plaques d'interconnexion, également appelées interconnecteurs. Ces cellules SOC fonctionnent à haute température (généralement entre 600°C et 1000°C) et sont chacune formées d'une cathode et d'une anode, séparées par un électrolyte conducteur ionique en oxydes solides.

Par exemple, dans le cas de l'électrolyse de l'eau pour produire de l'hydrogène à hautes températures (mode EHT), de la vapeur d'eau circule au niveau de la cathode où est généré de l'hydrogène sous forme gazeuse, et un gaz drainant, généralement de l'air, circule au niveau de l'anode et collecte ainsi l'oxygène généré sous forme gazeuse à l'anode.

La réversibilité des cellules électrochimiques permet de les faire fonctionner en mode SOFC ou en mode EHT en fonction du sens de passage du courant, mais des mécanismes réactionnels différents pour ces deux modes de fonctionnement entrainent des surtensions de polarisation ou des surtensions de concentration différentes. En outre, le fonctionnement en mode SOFC ou en mode EHT peut nécessiter des architectures et des microstructures différentes pour apporter/évacuer les réactifs/les produits de réactions. Concernant les mécanismes de dégradation, certains sont identiques pour ces deux modes de fonctionnement et d'autres sont spécifiques à l'électrolyse.

En fonctionnement, tout endommagement des matériaux d'électrodes et de leurs interfaces conduit inévitablement à une dégradation des performances électrochimiques de la cellule. Ainsi, les développements menés ces dernières années sur les matériaux et procédés de mise en forme utilisés pour élaborer les cellules électrochimiques et qui ont permis d'atteindre des niveaux de performances élevés en mode SOFC, ne donnent pas forcément les mêmes bons résultats en mode EHT.

Afin de limiter ces détériorations et d'augmenter la durée de vies des cellules, il est crucial de comprendre les mécanismes impliqués. Or, ces mécanismes de dégradation sont relativement difficiles à identifier et dépendent des conditions de test (densité de courant, pourcentage de vapeur dans le mélange H₂O/H₂ électrolysé, taux de conversion, température, etc.).

Actuellement, les études des mécanismes de dégradation sont réalisées à la fin d'une utilisation d'une cellule électrochimique et non au cours de son fonctionnement. A titre d'exemple, les analyses microstructurales réalisées sur les cellules électrochimiques élémentaires sont faites après le fonctionnement du système (pile SOFC ou électrolyseur EHT) et après une redescente en température. Elles ne sont donc pas toujours représentatives des dégradations du matériau en fonctionnement.

Les caractérisations électrochimiques fines, par exemple par spectroscopie d'impédance et par voltampérométrie, ne sont jamais associées à un suivi en ligne (*in situ*) des modifications de la structure cristallographique des électrodes étudiées.

Les analyses menées par diffraction des rayons X permettent de détecter et de mesurer l'espacement des couches atomiques dans les matériaux cristallins. Elles permettent notamment d'identifier des phases cristallines et de déterminer l'arrangement structural et la microstructure des matériaux. Ces analyses ne sont cependant pas effectuées sur le matériau d'électrode sous courant et ne sont donc pas toujours représentatives du vieillissement réel de l'électrode.

JP 2016 162587 divulgue un dispositif permettant de réaliser des mesures à l'aide de rayons X de type XAFS ou XRD sur une cellule de pile à électrolyte polymère (PEFC) en fonctionnement.

### EXPOSÉ DE L'INVENTION

L'invention vise à proposer un dispositif de maintien en température et sous courant d'une cellule électrochimique qui permette de réaliser une analyse *in situ* d'une électrode de la cellule électrochimique dans des conditions de température et de courant qui sont celles de fonctionnement de la cellule électrochimique. Ce dispositif permettrait d'étudier *in situ* la durabilité d'une cellule électrochimique élémentaire, notamment en fonctionnement EHT.

A cet effet, l'invention propose un dispositif pour maintenir une cellule électrochimique sous courant et à une température de fonctionnement au moins égale à 450°C au cours d'une analyse, par diffraction d'un faisceau de rayons X, d'une première électrode de la cellule, la cellule comportant un électrolyte solide intercalé entre ladite première électrode et une deuxième électrode de la cellule, ledit dispositif comprenant :
- un premier et un deuxième interconnecteur en un matériau électriquement conducteur, le premier interconnecteur ayant une face de contact destinée à venir au contact de la première électrode et étant configurée pour permettre une circulation et un échange gazeux et/ou électrique entre le premier interconnecteur et la première électrode, ainsi qu'un passage d'un faisceau de rayons X jusqu'à la première électrode, le deuxième interconnecteur ayant une face de contact destinée à venir au contact de la deuxième électrode et étant configurée pour permettre une circulation et un échange gazeux entre le deuxième interconnecteur et la deuxième électrode ; et
- des moyens pour alimenter en courant les premier et deuxième interconnecteurs ;
le dispositif étant caractérisé en ce qu'il comprend en outre :
- une chambre de confinement thermique et atmosphérique qui comprend un corps définissant une cavité intérieure pour le logement d'un empilement formé de la cellule électrochimique prise en sandwich entre les premier et deuxième interconnecteurs et qui comprend un couvercle configuré pour fermer la cavité, ledit couvercle étant muni d'une fenêtre laissant passer des rayons X, le premier interconnecteur étant destiné à être disposé face au couvercle de sorte que des rayons X traversant la fenêtre du couvercle traversent le premier interconnecteur pour parvenir à la première électrode ;
- des moyens pour alimenter la chambre en un gaz réactif ;
- des moyens pour évacuer au moins un gaz de la chambre ; et
- des moyens pour chauffer la cellule et/ou le gaz réactif dans la chambre à une température de fonctionnement de la cellule électrochimique ;

dans lequel la face de contact du premier interconnecteur est un élément ajouré, dont les parties ajourées sont agencées de manière homogène, forment de 30% à 80% de la surface de l'élément ajouré et sont disposées de sorte à obtenir une distribution homogène et symétrique du gaz réactif sur la cellule électrochimique, l'élément ajouré étant une grille ;
et dans lequel la face de contact du deuxième interconnecteur est un élément rainuré, par exemple un ressaut nervuré, adapté pour une distribution et/ou une collecte d'un gaz.

La cellule électrochimique fonctionne sous une atmosphère unique, par exemple sous air, la cellule étant donc alimenté en un seul et même gaz réactif. L'air présente l'avantage d'être à la fois un gaz réactif (en ce sens qu'il va participer à la réaction électrochimique dans la cellule) et qu'il sert également de gaz drainant permettant d'évacuer le gaz produit par la réaction électrochimique (typiquement l'oxygène généré sous forme gazeuse à l'anode lorsque les première et deuxième électrodes sont des électrodes à oxygène et que le gaz réactif est de l'air).

La cellule électrochimique fonctionne à hautes températures, c'est-à-dire à une température au moins égale à 450°C, typiquement comprise entre 600°C et 1000°C.

Les interconnecteurs sont, de façon connue, des dispositifs d'interconnexion électrique et fluidique, qui assurent des fonctions d'amenée et de collecte de courant à une électrode, ainsi que de circulation de gaz (distribution et/ou collecte).

Ces interconnecteurs sont réalisés en un matériau électriquement conducteur. Le matériau choisi doit pouvoir résister à des atmosphères qui peuvent être très réductrices ou oxydantes aux températures de fonctionnement de la cellule électrochimique (typiquement comprises entre 600 et 1000°C), comme c'est le cas, par exemple, des atmosphères réductrices riches en vapeur d'eau H₂O/H₂ du côté cathode des électrolyseurs EHT, des atmosphères réductrices riches en H₂ du côté anode dans les piles SOFC, des atmosphères oxydantes riches en O₂ du côté anode dans les réacteurs EHT et des atmosphères oxydantes riches en air du côté cathode dans les piles SOFC.

De préférence, les parties ajourées de l'élément ajouré forment 65% de la surface de l'élément ajouré.

De préférence, la face de contact du premier et du deuxième interconnecteur est en un matériau chimiquement stable dont le spectre de diffraction des rayons X n'interfère pas avec le diffractogramme de la cellule étudiée. A titre d'exemples, la face de contact du premier et du deuxième interconnecteur peut être en or ou en platine.

De préférence, le corps de la chambre comporte une enveloppe, par exemple en aluminium, délimitant un volume intérieur qui est garni avec un isolant thermique, par exemple un garnissage thermiquement isolant à base de silicate de calcium, permettant d'isoler thermiquement la cavité de l'extérieur de la chambre.

Avantageusement, la chambre comprend en outre des moyens pour refroidir une paroi extérieure de l'enveloppe, par exemple un circuit de refroidissement liquide disposé autour de l'enveloppe.

De préférence, la chambre est équipée de moyens pour mesurer une température de la cellule électrochimique ; il peut par exemple s'agir d'un thermocouple.

De préférence, le couvercle comporte une enveloppe, par exemple en aluminium, délimitant un volume intérieur qui est garni avec un isolant thermique, par exemple un garnissage thermiquement isolant à base de silicate de calcium, permettant d'isoler thermiquement la cavité de l'extérieur de la chambre, lorsque le couvercle ferme la cavité.

Le couvercle comporte une fenêtre qui est perméable aux rayons X et permet donc leur passage. De préférence, cette fenêtre est composée d'une feuille en un matériau perméable aux rayons X ayant une absorption des rayons X comprise entre 10% et 80% et résistant à une température d'au moins 800°C.

De préférence, le dispositif comprend en outre des moyens de réglage de la distance entre le premier interconnecteur et le couvercle, conçus pour amener la cellule en rapprochement ou en éloignement du couvercle par déplacement relatif en translation selon un axe central. Ces moyens de réglage peuvent par exemple être un élément fileté, comme une bague filetée, servant à supporter la cellule dans la cavité de la chambre et qui coopère avec l'enveloppe de la chambre de sorte qu'une rotation de l'élément fileté autour de l'axe central se traduit par une translation de la cellule en rapprochement ou en éloignement du couvercle.

L'invention concerne également un système d'analyse, par diffraction d'un faisceau de rayons X, d'une première électrode d'une cellule électrochimique sous courant et à une température de fonctionnement au moins égale à 450°C, ledit système comprenant un dispositif de maintien tel que décrit ci-dessus, une source de rayons X pour émettre un faisceau de rayons X et un détecteur de rayons X pour collecter le faisceau diffracté depuis la première électrode, la source étant positionnée de sorte qu'un faisceau de rayons X émis depuis la source puisse traverser la fenêtre du couvercle du dispositif de maintien et atteindre la première électrode de la cellule électrochimique et le détecteur étant positionné de sorte à détecter un faisceau de rayons X diffracté par la première électrode.

Avantageusement, le système comprend en outre des moyens de réglage de la position du dispositif de maintien par rapport à la source de rayons X et au détecteur. Ces moyens de réglage permettent d'ajuster la position en x, y et z du dispositif, et donc de la première électrode, par rapport à la source de rayons X et au détecteur. De préférence, ces moyens de réglage sont un goniomètre, le dispositif de maintien étant positionné sur le porte-échantillon du goniomètre.

Les moyens de réglage de la distance entre le premier interconnecteur et le couvercle, dont nous avions parlé un peu plus haut, sont donc ici conçus pour amener la cellule en rapprochement ou en éloignement du couvercle, et en l'occurrence, en rapprochement ou en éloignement du plan du goniomètre, par déplacement relatif en translation selon un axe central.

Préférentiellement, la source et le détecteur appartiennent à un diffractomètre à rayons X équipé d'un goniomètre et le dispositif est dimensionné de sorte à être positionné à la place du spinner (c'est-à-dire le porte-échantillon tournant) du goniomètre. On rappelle qu'un goniomètre est un appareil qui permet le réglage séquentiel de positions angulaires relatives successives entre la source de rayons X, l'échantillon sur lequel est dirigé le faisceau de rayons X et le détecteur de rayons X.

L'invention concerne également un procédé d'analyse, par diffraction d'un faisceau de rayons X, d'une première électrode d'une cellule électrochimique en fonctionnement au moyen d'un système tel que décrit ci-dessus, ledit procédé comprenant les étapes de :
- mise en place de la cellule élémentaire entre les premier et deuxième interconnecteurs, la première électrode étant mise en contact avec la face de contact du premier interconnecteur et la deuxième électrode étant mise en contact avec la face de contact du deuxième interconnecteur ;
- mise en place de l'empilement formé par la cellule élémentaire et les premier et deuxième interconnecteurs dans la cavité de la chambre de confinement et fermeture de la cavité à l'aide du couvercle, le premier interconnecteur étant disposé face au couvercle ;
- alimentation de la cellule en un gaz réactif ;
- chauffage de la cellule et/ou du gaz réactif dans la cavité et son maintien à une température de fonctionnement de la cellule, la température de fonctionnement étant au moins égale à 450°C ;
- réglage de la position de la première électrode de la cellule élémentaire par rapport à la source de rayons X et au détecteur de rayons X ;
- alimentation de la cellule en courant ;
- réalisation d'un diffractogramme de la première électrode.

De préférence, la cellule n'est alimentée en courant que lorsque la cellule a atteint sa température de fonctionnement.

Le diffractogramme est obtenu par diffractométrie du faisceau de rayons X, c'est-à-dire par mesure de la diffraction d'un faisceau de rayons X émis à partir de la source de rayons X, le faisceau passant au travers de la fenêtre et du premier interconnecteur pour atteindre la première électrode et détection, par le détecteur, du faisceau de rayons X diffracté par la première électrode.

Selon un mode de réalisation préféré de l'invention, le procédé d'analyse comprend en outre, avant la mise en place de la cellule élémentaire entre les premier et deuxième interconnecteurs, la formation d'une première couche de contact sur la première électrode et d'une deuxième couche de contact sur la deuxième électrode, les première et deuxième couches de contact étant en un matériau électriquement conducteur et ayant des trous traversants, la première et la deuxième couche recouvrant respectivement de 25 à 60% de la surface de la première et de la deuxième électrodes.

La présence de ces première et deuxième couches électriquement conductrices, réalisées directement sur les première et deuxième électrodes de la cellule élémentaire, permet d'obtenir une résistance de contact minime (de préférence inférieure à 0,1 ohm.cm²) entre les interconnecteurs et la cellule élémentaire étudiée, tout en permettant le passage du faisceau X (pour la face en regard du premier interconnecteur) et la circulation des gaz. Ces couches de contact avec leurs trous traversants ont la forme d'une grille. Classiquement, une résistance de contact supérieure à 0,3 ohm.cm² est obtenue sans ces première et deuxième couches de contact. Ainsi, la présence de ces première et deuxième couches de contact permet de pouvoir étudier l'échantillon sous une densité de courant représentative des conditions de fonctionnement d'une cellule électrochimique, sans générer de surtensions néfastes pour les matériaux de la cellule.

Les première et deuxième couches de contact sont en un matériau électriquement conducteur, de préférence ayant une conductivité électrique supérieure à 500 S/cm, typiquement en or ou en platine.

Elles peuvent être déposées par des technologies de dépôt telles que par pulvérisation, PVD, etc. De préférence, elles sont sérigraphiées.

Selon une variante de l'invention, au moins la première électrode est une électrode à oxygène. Par exemple, tandis que la première électrode (électrode travail) est une électrode à oxygène, la deuxième électrode (contre électrode) peut être en platine. En ayant une première électrode en un matériau différent de celui de la deuxième électrode, la cellule électrochimique est alors ce que l'on appelle une demi-cellule.

Les première et deuxième électrodes peuvent également être toutes les deux des électrodes à oxygène, la cellule électrochimique élémentaire étant alors une cellule symétrique à électrodes à oxygène.

Selon une variante préférée de l'invention, les deux électrodes de la cellule sont des électrodes à oxygène et le gaz réactif est de l'air. On entend par « air » un mélange gazeux comprenant au moins 5% d'O₂ dans un gaz neutre de type azote ou argon.

On rappelle que, dans une cellule électrochimique en fonctionnement, une des électrodes consomme de l'oxygène et fonctionne en mode SOFC et l'autre électrode produit du dioxygène O₂ et fonctionne en mode EHT. On choisit donc le mode de fonctionnement de la cellule en fonction du sens de passage du courant.

Le dispositif selon l'invention présente de nombreux avantages.

Le dispositif de maintien selon l'invention permet d'assurer le fonctionnement électrochimique d'une cellule élémentaire alimenté en gaz réactif, par exemple une cellule symétrique à électrodes à oxygène alimenté en air, ainsi que son analyse par des moyens de caractérisation électrochimiques classiques (spectroscopie d'impédance et voltamétrie notamment), tout en permettant l'analyse de la surface de la première électrode (fonctionnant en polarisation anodique ou cathodique) par diffraction des rayons X.

L'invention permet un test non destructif de la cellule électrochimique en fonctionnement. Elle permet notamment l'analyse *in situ* des mécanismes de dégradation du matériau de la première électrode. Elle permet notamment d'identifier les mécanismes de dégradation spécifiques du matériau en fonction d'un paramètre choisi parmi la température, la densité de courant et la polarisation anodique ou cathodique du matériau (selon le sens du passage du courant choisi).

D'autres caractéristiques et avantages de l'invention apparaîtront mieux à la lecture du complément de description qui suit et qui se réfère aux figures annexées.

### BRÈVE DESCRIPTION DES DESSINS

Les figures 1a et 1b sont, respectivement, une vue de dessus (figure 1a) et une vue de côté en coupe (figure 1b) selon la ligne AA d'un exemple de réalisation d'un premier interconnecteur selon l'invention.
Les figures 2a et 2b sont, respectivement, une vue de dessus (figure 2a) et une vue de côté en perspective (figure 2b) d'un exemple de réalisation d'un deuxième interconnecteur.
La figure 3 est une représentation schématique des premier et deuxième interconnecteurs une fois assemblés. On reprend ici respectivement la représentation de la figure 1b, pour le premier interconnecteur, et celle de la figure 2b, pour le deuxième interconnecteur.
La figure 4 est une vue de côté, en coupe, d'un exemple de réalisation d'une chambre de confinement thermique et atmosphérique selon l'invention.
Les figures 5a et 5b sont, respectivement, une vue de côté en coupe (figure 5a) et une vue de dessus (figure 5b) d'un exemple de réalisation d'un couvercle selon l'invention.
La figure 6 est une vue de côté d'un exemple de réalisation d'un dispositif de maintien selon l'invention.
La figure 7 est une représentation schématique d'un exemple de réalisation du système d'analyse selon l'invention.
La figure 8 est un diffractogramme d'un échantillon obtenu avec le système d'analyse selon l'invention.

### EXPOSÉ DÉTAILLÉ DE MODES DE RÉALISATION PARTICULIERS

L'invention permet d'assurer le fonctionnement électrochimique d'une cellule électrochimique élémentaire, de préférence le fonctionnement sous air d'une cellule symétrique à électrode à oxygène, tout en permettant l'analyse de la surface de l'électrode en contact avec le premier interconnecteur (fonctionnant en polarisation anodique ou cathodique) par diffraction de rayons X. L'analyse de la cellule par des moyens de caractérisation électrochimiques classiques (spectroscopie d'impédance de voltamétrie notamment) reste également possible.

En d'autres termes, l'invention permet de respecter les contraintes suivantes :
- maintenir la cellule électrochimique élémentaire à une température au moins égale à 450°C et sous courant de fonctionnement pendant l'analyse de l'électrode ; on peut notamment maintenir des cycles de vieillissement de 1000 heures de fonctionnement en continu, ce qui permet de réaliser une caractérisation électrochimique de l'électrode de la cellule en conditions réelles d'utilisation ;
- utiliser une température de fonctionnement de la cellule électrochimique supérieure à 450°C, de préférence comprise entre 600 et 1000°C, par exemple une température de 800°C, tout en réalisant une analyse de la première électrode par diffraction de rayons X.

Les électrodes de la cellule électrochimiques, de manière connue, doivent supporter la densité de courant qui les traverse. De préférence, on choisit des électrodes pouvant supporter une densité de courant d'au moins 2 Ampères/cm².

Bien évidemment, l'électrode à analyser (la première électrode) est choisie en un matériau permettant la diffraction des rayons X (c'est-à-dire en un matériau laissant passer au moins 30% d'un faisceau de rayons X). On rappelle que les rayons X ont une longueur d'onde comprise approximativement entre 0,01 nm et 10 nm (10⁻¹¹m et 10⁻⁸m. On peut notamment utiliser une électrode à oxygène qui permet un échange d'oxygène entre la cellule électrochimique élémentaire et un flux d'air.

Les premier et deuxième interconnecteurs doivent permettre un contact électrique avec l'électrode avec laquelle ils sont en contact. Il faut donc choisir un matériau qui soit un bon conducteur électrique (>10 S/cm). Mais les interactions chimiques entre le matériau de l'interconnecteur et de son électrode doivent être limitées ; idéalement, le matériau de l'interconnecteur ne doit pas interférer chimiquement avec l'électrode avec laquelle il est en contact. En outre, les pics du diffractogramme (obtenu par diffraction de rayons X) du matériau du premier interconnecteur, ne doivent pas se superposer aux pics du diffractogramme de la première électrode. On choisit donc généralement de l'or ou du platine. Pour des raisons de coûts, on réalise de préférence la structure 3 des interconnecteurs en inox 316L ou en Inconel^{™} et seule la partie en contact avec l'électrode (élément ajouré 2 ou élément rainuré 4) est réalisée en or ou en platine, ou en tout autre matériau chimiquement stable dont le spectre n'interfère pas avec le diffractogramme de la cellule étudiée et dont la température de fusion est supérieure à 1000°C.

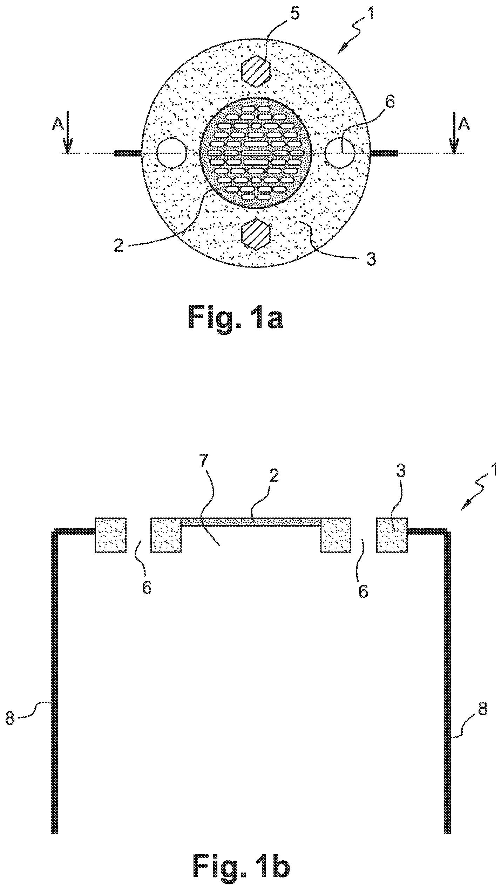

Dans les figures 1a et 1b sont représentés le premier interconnecteur 1 destiné à être en contact avec la première électrode de la cellule. Selon le sens du courant appliqué dans la cellule, la première électrode pourra être l'anode (la cathode) de la cellule et le premier interconnecteur un interconnecteur anodique (cathodique). La face de contact du premier interconnecteur avec la première électrode est un élément ajouré 2, qui permet à la fois un contact électrique entre le premier interconnecteur et la première électrode, une circulation et un échange gazeux avec la première électrode de la cellule électrochimique et le passage du faisceau de rayons X jusqu'à la première électrode. Cet élément ajouré 2 est ici une grille en or ou en platine, dont les caractéristiques sont les suivantes :
- diamètre des fils constituant la grille : 60 µm ;
- espace nominal entre les fils : 250 µm ;
- densité surfacique : 32×32 fils par cm² ;
- surface ajourée : 65%.

Généralement, 400g/cm² sont nécessaires pour avoir un effort de contact satisfaisant entre une grille et une électrode. Ici, pour garantir un contact satisfaisant, la grille est déposée directement sur la première électrode.

Le premier interconnecteur comporte en outre des vis 5 en un matériau électriquement isolant et résistant à des températures supérieures à 1000°C, permettant l'assemblage du premier interconnecteur avec le deuxième interconnecteur, et des ouvertures 6, pour permettre la circulation d'un gaz.

Dans la figure 1a, on peut apercevoir l'emplacement 7 pour le logement de la cellule, ainsi que deux alimentations en courant 8 (en fait, un fil d'arrivée de courant et un fil de mesure de tension).

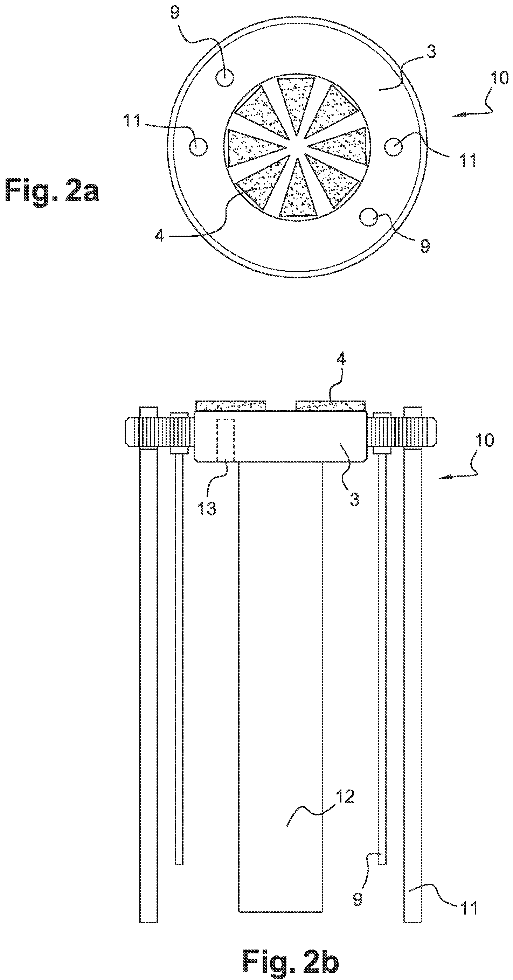

Dans les figures 2a et 2b sont représentés le deuxième interconnecteur 10. Sa face de contact avec la deuxième électrode comporte un élément rainuré 4, ici un ressaut nervuré, qui permet une circulation et un échange gazeux avec la deuxième électrode de la cellule électrochimique, avec laquelle il est en contact.

Le deuxième interconnecteur comporte également deux alimentations en courant 9 (en fait, un fil d'arrivée de courant et un fil de mesure de tension) et deux conduites de circulation 11 de gaz (distribution pour l'une (gaz réactif) et collecte pour l'autre (gaz drainant et gaz produits par la réaction électrochimique)), un logement 12 pour les moyens de chauffage du gaz réactif et/ou de la cellule dans la chambre et un logement 13 (représenté en pointillés dans la figure 2b) pour les moyens de mesure de la température de la cellule.

Les conduites de circulation 11 de gaz peuvent par exemple être réalisées en inox 316.

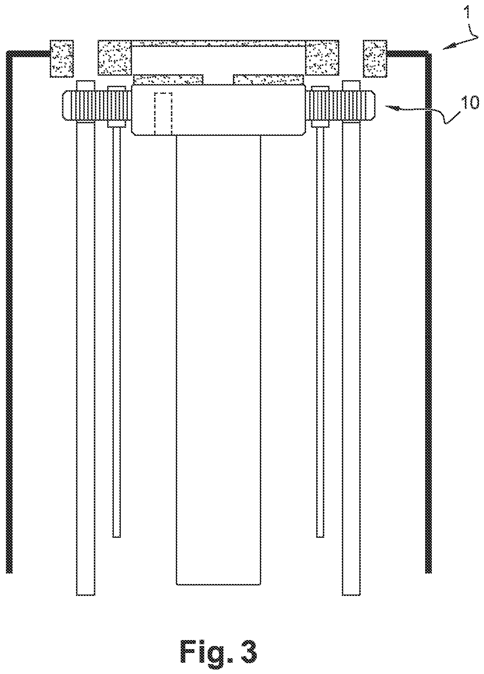

Afin de maintenir le contact, d'une part, entre le premier interconnecteur 1 et la première électrode et, d'autre part, entre le deuxième interconnecteur 10 et la deuxième électrode, la cellule (non représentée) est placée entre les deux interconnecteurs (emplacement 7) et ces derniers sont ensuite assemblés (figure 3). L'assemblage des interconnecteurs peut être assuré par deux vis en alumine (Al₂0₃) (référence 5 dans la figure 1, mais non représentées dans la figure 3) garantissant une isolation électrique entre les deux interconnecteurs et offrant une excellente tenue thermique.

Selon un mode de réalisation préféré de l'invention, une première et une deuxième couche de contact sont déposées respectivement sur la première et sur la deuxième électrode de la cellule électrochimique. Ces couches de contact sont par exemple sérigraphiées sur les électrodes en température et sous l'atmosphère d'étude de la cellule et sont typiquement en or ou en platine. Le matériau conducteur des première et deuxième couches de contact doit être uniformément réparti sur la toute la surface de la première et de la deuxième électrode pour garantir une bonne répartition des lignes de courant, tout en présentant des trous traversants permettant la circulation des gaz produits, ainsi que le passage du faisceau X pour la première électrode en regard du premier interconnecteur. C'est ainsi que chaque couche de contact recouvre entre 25 et 60% de la surface de l'électrode sur laquelle elle est déposée.

Les trous traversants sont configurés pour permettre la circulation des gaz de manière homogène sur toute la cellule électrochimique et permettre au faisceau X d'atteindre la cellule selon au moins l'axe de déplacement du faisceau, de préférence avec un angle allant de 20 à 160° par rapport au plan formé par la surface de la première électrode.

Un exemple de couches de contact est une grille d'or sérigraphiée, composée de traits horizontaux et verticaux ayant une largeur de 500 µm, qui sont espacés de 500 µm dans le sens horizontal et de 300 µm dans le sens vertical. On obtient ainsi des trous traversants ayant la forme de rectangles de 300 µm ×500 µm, qui sont accessibles par le faisceau X. En orientant le faisceau dans le sens du plus grand côté des rectangles, on autorise des angles incidents dans une gamme la plus large possible (20 à 160°). L'épaisseur du dépôt des couches de contact est choisie de manière à obtenir un contact suffisant avec l'électrode (soit une épaisseur d'au moins 200 nm) et permettre au faisceau X d'atteindre l'électrode. L'épaisseur maximale est par exemple calculée pour qu'un faisceau X incident avec un angle de 20 et 160° puisse atteindre le matériau de l'échantillon (soit une épaisseur typiquement de 2 µm).

Dans la figure 3, les interconnecteurs adoptent une configuration de mesure de type Kelvin (mesure 4 points), c'est-à-dire que deux fils d'arrivée de courant et deux fils de mesure de tension sont prévus, afin de pouvoir effectuer des mesures électrochimiques à quatre fils.

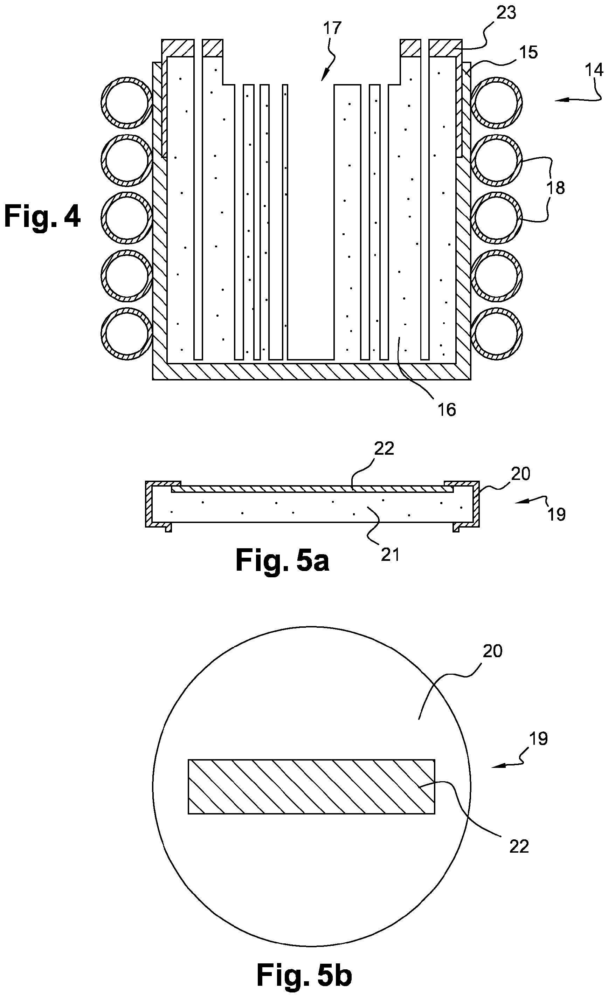

Dans la figure 4 est représentée la chambre de confinement thermique et atmosphérique 14. Elle comporte une enveloppe 15 qui délimite un espace intérieur qui est garni avec un isolant thermique 16 de manière à définir une cavité 17 pour le logement de la cellule électrochimique.

Des moyens 18 pour refroidir la paroi extérieure de l'enveloppe 15 sont disposés autour de la chambre. Par exemple, ces moyens de refroidissement 18 sont une circulation de liquide de refroidissement en circuit fermé qui entoure la chambre, de sorte que le delta de températures entre la température à l'intérieur de la chambre et la température à l'extérieur de la chambre soit au minimum de 750°C. En effet, au-dessus de 50°C, la source de rayons X et le détecteur risqueraient d'être endommagés.

Dans cet exemple de réalisation, la chambre 14 comporte également une bague filetée 23 qui coopère avec un filetage correspondant situé sur l'enveloppe 15 du corps de la chambre. En tournant la bague filetée 23 autour d'un axe central passant par les premier et deuxième interconnecteurs 1 et 10, on peut régler la distance entre la première électrode de la cellule 2 et le plan du goniomètre, afin de rapprocher la première électrode de la cellule de la fenêtre du couvercle.

Le couvercle 19 permet de confiner l'atmosphère à l'intérieur de la chambre 14, tout en assurant une barrière thermique avec l'extérieur. Il peut par exemple être composé d'une enveloppe 20 dont l'intérieur est tapissé d'un isolant thermique 21 (figure 5a).

Les isolants thermiques 16 et 17 utilisés dans la chambre doivent résister à la température d'utilisation de la cellule électrochimique, sans émettre de polluants par dégazage. Dans cet exemple de réalisation, la température d'utilisation de la cellule électrochimique est prévue pour être de 800°C. L'enveloppe 15 formant le corps de la chambre et l'enveloppe 20 formant le couvercle 19 peuvent donc par exemple être réalisées en aluminium et les isolants thermiques 16 et 17 peuvent être à base de silicate de calcium, par exemple en Duratec^{™} 750 ou Duratec^{™} 1000.

Le couvercle 19 comporte une fenêtre 22 dont la fonction est de permettre le passage d'un faisceau de rayons X, tout en conservant le confinement thermique et atmosphérique de la chambre. La fenêtre 22 doit donc être faiblement absorbante vis-à-vis des rayons X. De préférence, elle est conçue pour permettre le passage des rayons X aux angles supérieurs à 20°.

La fenêtre 22 de passage des rayons X doit résister à la température de fonctionnement de la cellule électrochimique élémentaire (dans notre exemple, 800°C) sans émettre de polluants par dégazage. En outre, il est préférable qu'elle soit inerte en atmosphère oxydante ou réductrice.

Enfin, la fenêtre de passage des rayons X doit permettre d'éviter au maximum les pertes thermiques par convection, tout en pouvant réaliser des diffractogrammes de rayons X.

Dans notre exemple de réalisation, le couvercle 19 comporte une enveloppe 20 en aluminium, dont l'intérieur est garni de Duratec^{™} 1000 et la fenêtre de passage des rayons X est réalisée dans une feuille de graphite (pureté de 99,9% atomique) d'une épaisseur de 250 µm. Le facteur d'atténuation du signal est ainsi de 0,35. Nous aurions également pu utiliser du béryllium à la place du graphite.

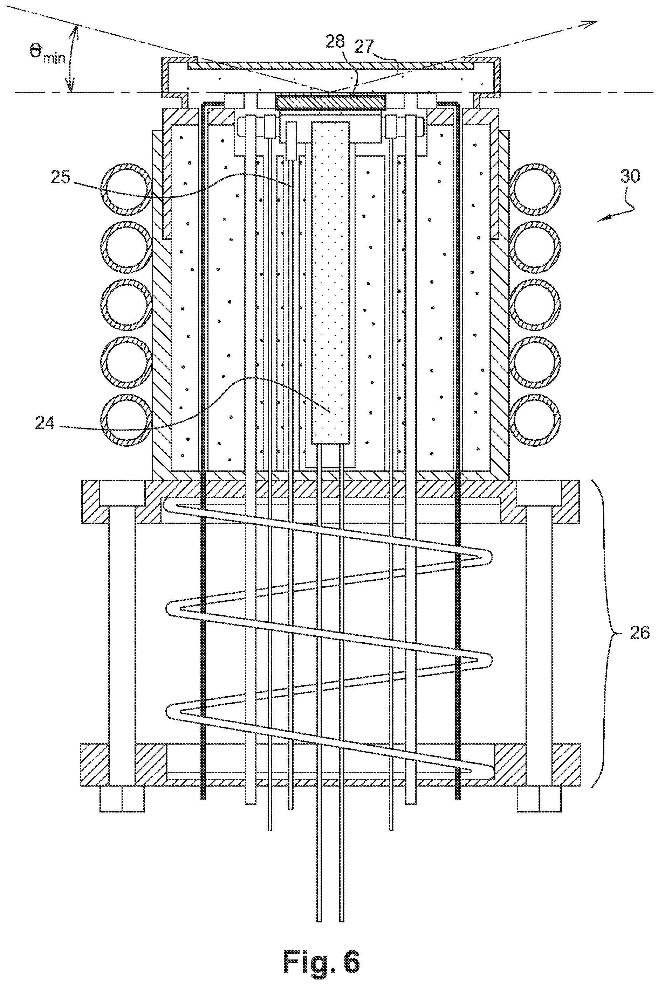

Dans la figure 6 est représenté un exemple de réalisation du dispositif de maintien 30 selon l'invention.

La cellule électrochimique élémentaire 28 a été placée entre les premier et deuxième interconnecteurs 1 et 10.

Des moyens de chauffage 24 du gaz réactif et/ou de la cellule dans la chambre à une température de fonctionnement de la cellule électrochimique ont été insérés dans le logement 12. Il est préférable de choisir un élément compact et fiable pouvant supporter des charges thermiques surfaciques de l'ordre de 30 Watts/cm². Les moyens de chauffage 24 sont ici une cartouche chauffante haute charge en nitrure de bore (diamètre : 10 mm ; longueur : 40 mm ; puissance : 150 W ; tension : 230 V ; longueur des câbles : 250 mm). La cartouche chauffante est de préférence noyée dans de la magnésie fortement comprimée et protégée par un blindage en acier inoxydable (inox 316 ou Inconel^{™}) et la sortie se fait sur des fils perlés céramique. La cartouche est en contact avec le deuxième interconnecteur et va donc le chauffer par conduction thermique, de même que le ou les gaz contenus dans les conduites 11 de circulation. Les moyens de chauffage 24 permettent donc ici de chauffer à la fois le gaz réactif et la cellule.

Des moyens 25 pour mesurer la température de la cellule électrochimique ont été insérés dans le logement 13. Il s'agit par exemple d'un thermocouple de type K : chromel/alumel.

De préférence, les moyens pour alimenter la chambre en gaz réactif, c'est-à-dire les ouvertures 6 dans le premier interconnecteur et les conduites de circulation 11 dans le deuxième interconnecteur, sont disposés de sorte à obtenir une distribution homogène et symétrique du gaz réactif sur la cellule électrochimique. Selon l'invention, les parties ajourées de l'élément ajouré du premier interconnecteur sont disposés de sorte à obtenir une distribution homogène et symétrique du gaz réactif sur la cellule électrochimique.

De préférence, la chambre est alimentée par un flux gazeux constant en gaz réactif.

Dans cet exemple de réalisation, le dispositif de maintien 30 est équipé de moyens 26 permettant de régler la position du dispositif de maintien par rapport à la source de rayons X et au détecteur. Ces moyens 26 de réglage peuvent par exemple être une table de positionnement micrométrique équipée de molettes permettant une translation selon la direction x, une translation selon la direction y et une translation selon la direction z.

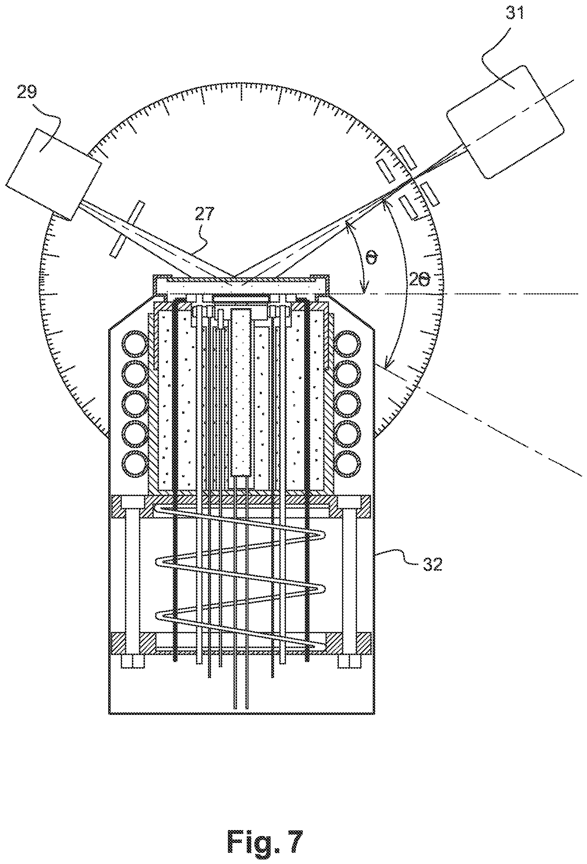

Un diffractomètre à rayons X comporte généralement un dispositif, appelé goniomètre, qui permet une rotation synchrone de la source 29 de rayons X et du détecteur 31 de rayons X autour d'un axe passant par le plan de l'échantillon. On utilise généralement un goniomètre à géométrie Bragg-Brentano avec une configuration (θ-θ) dans laquelle la distance échantillon-détecteur reste constante quel que soit l'angle. Dans la figure 7, un cercle gradué matérialise les angles de diffraction fixé au goniomètre du diffractomètre.

Le dispositif de maintien selon l'invention peut être conçu pour s'adapter sur le goniomètre d'un diffractomètre, par exemple un diffractomètre de type D8 de chez Bruker, en lieu et place du spinner d'origine du goniomètre. L'emplacement du spinner (porte-échantillon tournant) est symbolisé par la référence 32 dans la figure 7. Afin que le dispositif de maintien puisse prendre la place du spinner du goniomètre, son encombrement maximal doit correspondre aux dimensions du spinner. Son encombrement maximal devra généralement être contenu dans un cylindre de 20 cm de hauteur pour un diamètre de 10 cm.

Pour réaliser un diffractogramme, on utilise la source 29 de rayons X (généralement un tube de cuivre) qui émet un faisceau 27 de rayons X sur l'échantillon à caractériser. Les faisceaux diffractés sont collectés par le détecteur 31. Les cercles de focalisation passent par la source 29, le détecteur 31 et sont toujours tangents à l'échantillon. Ce dernier doit donc tourner autour de son centre de telle sorte qu'il fasse toujours un angle θ avec le faisceau de rayon X. Cet angle est donc différent à chaque position angulaire.

Pour illustrer l'invention, nous avons réalisé un diffractogramme sur une cellule électrochimique élémentaire symétrique à électrodes à oxygène en utilisant le dispositif de maintien tel que décrit ci-dessus.

Pour les électrodes à oxygène, nous avons choisi deux électrodes en ferro-cobaltites de lanthane dopés au strontium de formule générale La₁₋ₓSrₓCo_{1-y}Fe_{y}O_{3-σ} (LSCF), ici deux électrodes en La_{0,8}Sr_{0,2}Co_{0,2}Fe_{0,8}O_{2,9}, disposées de part et d'autre d'un électrolyte solide en oxyde de zirconium stabilisé à l'yttrium (YSZ), ici du Y_{1,2}Zr_{0,6}O₃.

La chambre a été alimentée en air avec un flux gazeux constant d'un débit moyen de 0,5 L/min et la cellule a été chauffée à une température de 800°C pendant une durée de 150 h.

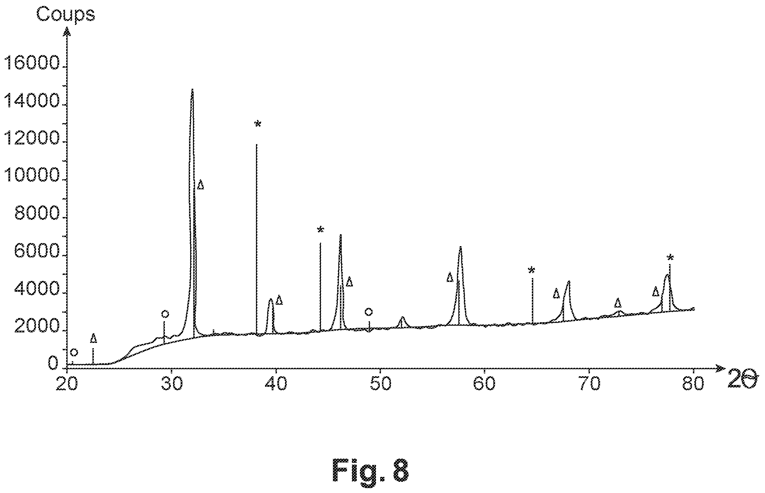

Sur le graphe de la figure 8, on constate que les pics provenant de l'or de la grille du premier interconnecteur (pics repérés par le symbole *) n'interfèrent pas avec ceux de la première électrode (ou de la deuxième électrode) (repérés par le symbole Δ) ou ceux de l'électrolyte solide (repérés par le symbole o).

## Revendications

1. Dispositif pour maintenir une cellule électrochimique sous courant et à une température de fonctionnement au moins égale à 450°C au cours d'une analyse, par diffraction d'un faisceau de rayons X, d'une première électrode de la cellule, la cellule comportant un électrolyte solide intercalé entre ladite première électrode et une deuxième électrode de la cellule, ledit dispositif comprenant :
- un premier (1) et un deuxième (10) interconnecteur en un matériau électriquement conducteur, le premier interconnecteur ayant une face de contact destinée à venir au contact de la première électrode et étant configurée pour permettre une circulation et un échange gazeux entre le premier interconnecteur et la première électrode, ainsi qu'un passage d'un faisceau de rayons X jusqu'à la première électrode, le deuxième interconnecteur ayant une face de contact destinée à venir au contact de la deuxième électrode et étant configurée pour permettre une circulation et un échange gazeux entre le deuxième interconnecteur et la deuxième électrode ; et
- des moyens (8, 9) pour alimenter en courant les premier et deuxième interconnecteurs ;
le dispositif étant **caractérisé en ce qu'**il comprend en outre :
- une chambre (14) de confinement thermique et atmosphérique qui comprend un corps définissant une cavité intérieure (17) pour le logement d'un empilement formé de la cellule électrochimique prise en sandwich entre les premier et deuxième interconnecteurs et qui comprend un couvercle (19) configuré pour fermer la cavité, ledit couvercle étant muni d'une fenêtre (22) laissant passer des rayons X, le premier interconnecteur étant destiné à être disposé face au couvercle de sorte que des rayons X traversant la fenêtre du couvercle traversent le premier interconnecteur pour parvenir à la première électrode ;
- des moyens (6) pour alimenter la chambre en un gaz réactif ;
- des moyens pour évacuer au moins un gaz de la chambre ; et
- des moyens (24) pour chauffer la cellule et/ou le gaz réactif dans la chambre à une température de fonctionnement de la cellule électrochimique, cette température de fonctionnement étant au moins égale à 450°C ;
dans lequel la face de contact du premier interconnecteur est un élément ajouré (2) dont les parties ajourées sont agencées de manière homogène, forment de 30% à 80% de la surface de l'élément ajouré et sont disposées de sorte à obtenir une distribution homogène et symétrique du gaz réactif sur la cellule électrochimique, l'élément ajouré étant une grille ;
dans lequel la face de contact du deuxième interconnecteur est un élément rainuré (4), par exemple un ressaut nervuré, adapté pour une distribution et/ou une collecte d'un gaz.

2. Dispositif selon la revendication 1, dans lequel le corps de la chambre comporte une enveloppe (15), par exemple en aluminium, délimitant un volume intérieur qui est garni avec un isolant thermique, par exemple un garnissage thermiquement isolant à base de silicate de calcium, permettant d'isoler thermiquement la cavité de l'extérieur de la chambre

3. Dispositif selon la revendication 2, dans lequel la chambre comprend en outre des moyens (18) pour refroidir une paroi extérieure de l'enveloppe, par exemple un circuit de refroidissement liquide disposé autour de l'enveloppe.

4. Dispositif selon l'une quelconque des revendications 1 à 3, dans lequel la fenêtre du couvercle est en graphite.

5. Dispositif selon l'une quelconque des revendications 1 à 4, comprenant en outre des moyens (23) de réglage de la distance entre le premier interconnecteur et le couvercle, conçus pour amener la cellule en rapprochement ou en éloignement du couvercle par déplacement relatif en translation selon un axe central.

6. Dispositif selon la revendication 5, dans lequel les moyens de réglage sont un élément fileté servant à supporter la cellule dans la cavité de la chambre et qui coopère avec l'enveloppe de la chambre de sorte qu'une rotation de l'élément fileté autour de l'axe central se traduit par une translation de la cellule en rapprochement ou en éloignement du couvercle.

7. Système d'analyse, par diffraction d'un faisceau de rayons X, d'une première électrode d'une cellule électrochimique sous courant et à une température de fonctionnement au moins égale à 450°C, ledit système comprenant un dispositif de maintien tel que décrit dans l'une quelconque des revendications 1 à 6, une source de rayons X pour émettre un faisceau de rayons X et un détecteur (31) de rayons X pour collecter le faisceau diffracté depuis la première électrode, la source étant positionnée de sorte qu'un faisceau de rayons X émis depuis la source puisse traverser la fenêtre du couvercle du dispositif de maintien et atteindre la première électrode de la cellule électrochimique et le détecteur étant positionné de sorte à détecter un faisceau de rayons X diffracté par la première électrode.

8. Système selon la revendication 7, comprenant en outre des moyens de réglage (26) de la position du dispositif de maintien par rapport à la source de rayons X et au détecteur.

9. Système selon la revendication 8, dans lequel les moyens de réglage de la position du dispositif sont un goniomètre, le dispositif de maintien étant positionné sur le porte-échantillon du goniomètre.

10. Procédé d'analyse, par diffraction d'un faisceau de rayons X, d'une première électrode d'une cellule électrochimique en fonctionnement à l'aide d'un système selon l'une quelconque des revendications 7 à 9, ledit procédé comprenant les étapes de :
- mise en place de la cellule élémentaire entre les premier et deuxième interconnecteurs, la première électrode de la cellule étant mise en contact avec la face de contact du premier interconnecteur et la deuxième électrode de la cellule étant mise en contact avec la face de contact du deuxième interconnecteur ;
- mise en place de l'empilement formé par la cellule élémentaire et les premier et deuxième interconnecteurs dans la cavité de la chambre de confinement et fermeture de la cavité à l'aide du couvercle, le premier interconnecteur étant disposé face au couvercle ;
- alimentation de la cellule en un gaz réactif ;
- chauffage de la cellule et/ou du gaz réactif dans la cavité et son maintien à une température de fonctionnement de la cellule, la température de fonctionnement étant au moins égale à 450°C ;
- réglage de la position de la première électrode de la cellule élémentaire par rapport à la source de rayons X et au détecteur de rayons X ;
- alimentation de la cellule en courant ;
- réalisation d'un diffractogramme de la première électrode.

11. Procédé d'analyse selon la revendication 10, comprenant en outre, avant la mise en place de la cellule élémentaire entre les premier et deuxième interconnecteurs, la formation d'une première couche de contact sur la première électrode et d'une deuxième couche de contact sur la deuxième électrode, les première et deuxième couches de contact étant en un matériau électriquement conducteur et ayant des trous traversants, la première et la deuxième couche recouvrant respectivement de 25 à 60% de la surface de la première et de la deuxième électrodes.

12. Procédé d'analyse selon la revendication 10 ou la revendication 11, dans lequel au moins la première électrode est une électrode à oxygène.

13. Procédé d'analyse selon la revendication 11, dans lequel les deux électrodes sont des électrodes à oxygène et le gaz réactif est de l'air.

## Patentansprüche

1. Vorrichtung zum Halten einer elektrochemischen Zelle unter Strom und bei einer Betriebstemperatur von mindestens 450 °C während einer Analyse einer ersten Elektrode der Zelle durch Röntgenstrahlbeugung, wobei die Zelle einen Festelektrolyten enthält, der zwischen der ersten Elektrode und einer zweiten Elektrode der Zelle eingefügt ist, wobei die Vorrichtung Folgendes umfasst:
- eine erste (1) und eine zweite (10) Zwischenverbindung aus einem elektrisch leitenden Material, wobei die erste Zwischenverbindung eine Kontaktfläche aufweist, die dazu bestimmt ist, mit der ersten Elektrode in Kontakt zu gelangen, und dazu konfiguriert ist, eine Gaszirkulation und einen Gasaustausch zwischen der ersten Zwischenverbindung und der ersten Elektrode sowie einen Durchgang eines Röntgenstrahls bis zur ersten Elektrode zu ermöglichen, wobei die zweite Zwischenverbindung eine Kontaktfläche aufweist, die dazu bestimmt ist, mit der zweiten Elektrode in Kontakt zu gelangen, und dazu konfiguriert ist, eine Gaszirkulation und einen Gasaustausch zwischen der zweiten Zwischenverbindung und der zweiten Elektrode zu ermöglichen; und
- Mittel (8, 9) zum Versorgen der ersten und der zweiten Zwischenverbindung mit Strom;
wobei die Vorrichtung **dadurch gekennzeichnet ist, dass** sie ferner Folgendes umfasst:
- eine thermische und atmosphärische Eindämmungskammer (14), die einen Körper umfasst, der einen inneren Hohlraum (17) zur Aufnahme eines Stapels definiert, der durch die elektrochemische Zelle gebildet wird, die sandwichartig zwischen der ersten und der zweiten Zwischenverbindung angeordnet ist, und die eine Abdeckung (19) umfasst, die dazu konfiguriert ist, den Hohlraum zu verschließen, wobei die Abdeckung mit einem Fenster (22) ausgestattet ist, das Röntgenstrahlen hindurchtreten lässt, wobei die erste Zwischenverbindung dazu bestimmt ist, vor der Abdeckung angeordnet zu sein, so dass Röntgenstrahlen, die durch das Fenster der Abdeckung hindurchtreten, durch die erste Zwischenverbindung hindurchtreten, um die erste Elektrode zu erreichen;
- Mittel (6) zum Versorgen der Kammer mit einem reaktiven Gas;
- Mittel zum Ableiten von mindestens einem Gas aus der Kammer; und
- Mittel (24) zum Erwärmen der Zelle und/oder des reaktiven Gases in der Kammer auf eine Betriebstemperatur der elektrochemischen Zelle, wobei die Betriebstemperatur mindestens 450 °C beträgt;
wobei die Kontaktfläche der ersten Zwischenverbindung ein perforiertes Element (2) ist, dessen perforierte Teile homogen angebracht sind und 30 % bis 80 % der Oberfläche des perforierten Elements ausmachen und derart angeordnet sind, dass sie eine homogene und symmetrische Verteilung des reaktiven Gases auf der elektrochemischen Zelle erzielen, wobei das perforierte Element ein Gitter ist;
wobei die Kontaktfläche der zweiten Zwischenverbindung ein gerilltes Element (4) ist, zum Beispiel ein gerippter Vorsprung, das zum Verteilen und/oder Sammeln eines Gases ausgelegt ist.

2. Vorrichtung nach Anspruch 1, wobei der Körper der Kammer eine Auskleidung (15), zum Beispiel aus Aluminium, umfasst, die ein Innenvolumen begrenzt, das mit einem thermisch isolierenden Material, zum Beispiel einer thermisch isolierenden Füllung auf Kalziumsilikatbasis, gefüllt ist, wodurch ermöglicht wird, den Hohlraum gegenüber der Außenseite der Kammer thermisch zu isolieren.

3. Vorrichtung nach Anspruch 2, wobei die Kammer ferner Mittel (18) zum Kühlen einer Außenwand der Auskleidung, zum Beispiel eines Flüssigkeitskühlkreislaufs, umfasst, der um die Auskleidung herum angeordnet ist.

4. Vorrichtung nach einem der Ansprüche 1 bis 3, wobei das Fenster der Abdeckung aus Grafit ist.

5. Vorrichtung nach einem der Ansprüche 1 bis 4, die ferner Mittel (23) zum Einstellen des Abstands zwischen der ersten Zwischenverbindung und der Abdeckung umfasst, die dazu ausgebildet sind, die Zelle durch eine relative Translationsverschiebung entlang einer Mittelachse näher an die Abdeckung heran oder von dieser weg zu bewegen.

6. Vorrichtung nach Anspruch 5, wobei die Einstellmittel ein Gewindeelement sind, das zum Tragen der Zelle im Hohlraum der Kammer verwendet wird und das mit der Auskleidung der Kammer so zusammenwirkt, dass eine Drehung des Gewindeelements um die Mittelachse in eine Verschiebung der Zelle näher an die Abdeckung heran oder von dieser weg übersetzt wird.

7. System zum Analysieren einer ersten Elektrode einer elektrochemischen Zelle unter Strom und bei einer Betriebstemperatur von mindestens 450 °C durch Röntgenstrahlbeugung, wobei das System eine Haltevorrichtung wie in einem der Ansprüche 1 bis 6 beschrieben, eine Röntgenquelle zum Aussenden eines Röntgenstrahls und einen Röntgendetektor (31) zum Sammeln des von der ersten Elektrode gebeugten Strahls umfasst, wobei die Quelle so positioniert ist, dass ein von der Quelle ausgesendeter Röntgenstrahl durch das Fenster der Abdeckung der Haltevorrichtung hindurchtreten und die erste Elektrode der elektrochemischen Zelle erreichen kann, und wobei der Detektor so positioniert ist, dass er den von der ersten Elektrode gebeugten Röntgenstrahl detektiert.

8. System nach Anspruch 7, das ferner Mittel zum Einstellen (26) der Position der Haltevorrichtung in Bezug auf die Röntgenquelle und den Detektor umfasst.

9. System nach Anspruch 8, wobei die Mittel zum Einstellen der Position der Vorrichtung ein Goniometer sind, wobei die Haltevorrichtung auf dem Probenhalter des Goniometers positioniert ist.

10. Verfahren zum Analysieren einer ersten Elektrode einer elektrochemischen Zelle im Betrieb durch Röntgenstrahlbeugung mit Hilfe eines Systems nach einem der Ansprüche 7 bis 9, wobei das Verfahren die folgenden Schritte umfasst:
- Platzieren der Elementarzelle zwischen der ersten und der zweiten Zwischenverbindung, wobei die erste Elektrode der Zelle mit der Kontaktfläche der ersten Zwischenverbindung in Kontakt gebracht wird und die zweite Elektrode der Zelle mit der Kontaktfläche der zweiten Zwischenverbindung in Kontakt gebracht wird;
- Platzieren des Stapels, der aus der Elementarzelle und der ersten und der zweiten Zwischenverbindung gebildet wird, in dem Hohlraum der Eindämmungskammer und Verschließen des Hohlraums mit Hilfe der Abdeckung, wobei die erste Zwischenverbindung vor der Abdeckung angeordnet ist;
- Versorgen der Zelle mit einem reaktiven Gas;
- Erwärmen der Zelle und/oder des reaktiven Gases im Hohlraum und Halten auf einer Betriebstemperatur der Zelle, wobei die Betriebstemperatur mindestens 450 °C beträgt;
- Einstellen der Position der ersten Elektrode der Elementarzelle in Bezug auf die Röntgenquelle und den Röntgendetektor;
- Versorgen der Zelle mit Strom;
- Erstellen eines Diffraktogramms der ersten Elektrode.

11. Analyseverfahren nach Anspruch 10, das ferner vor dem Platzieren der Elementarzelle zwischen der ersten und der zweiten Zwischenverbindung das Bilden einer ersten Kontaktschicht auf der ersten Elektrode und einer zweiten Kontaktschicht auf der zweiten Elektrode umfasst, wobei die erste und die zweite Kontaktschicht aus einem elektrisch leitenden Material bestehen und Durchgangslöcher aufweisen, wobei die erste und die zweite Schicht jeweils 25 bis 60 % der Oberfläche der ersten und der zweiten Elektrode bedecken.

12. Analyseverfahren nach Anspruch 10 oder Anspruch 11, wobei mindestens die erste Elektrode eine Sauerstoffelektrode ist.

13. Analyseverfahren nach Anspruch 11, wobei die beiden Elektroden Sauerstoffelektroden sind und das reaktive Gas Luft ist.

## Claims

1. A device for maintaining an electrochemical cell under current and at an operating temperature at least equal to 450°C during an analysis, by diffraction of an X-ray beam, of a first electrode of the cell, the cell including a solid electrolyte interposed between said first electrode and a second electrode of the cell, said device comprising:
- a first (1) and a second (10) interconnector made of an electrically conductive material, the first interconnector having a contact face intended to be in contact with the first electrode and being configured to enable circulation and gas exchange between the first interconnector and the first electrode, as well as a passage of an X-ray beam to the first electrode, the second interconnector having a contact face intended to be in contact with the second electrode and being configured to allow circulation and gas exchange between the second interconnector and the second electrode; and
- means (8, 9) for supplying current to the first and second interconnectors;
the device being **characterised in that** it further comprises:
- a thermal and atmospheric confinement chamber (14) which comprises a body defining an internal cavity (17) for housing a stack formed of the electrochemical cell sandwiched between the first and second interconnectors and which comprises a cover (19) configured to close the cavity, said cover being provided with a window (22) allowing X-rays to pass through, the first interconnector being intended to be disposed facing the cover so that X-rays passing through the window of the cover pass through the first interconnector to reach the first electrode;
- means (6) for supplying the chamber with a reactive gas;
- means for evacuating at least one gas from the chamber; and
- means (24) for heating the cell and/or the reactive gas in the chamber to an operating temperature of the electrochemical cell, this operating temperature being at least equal to 450°C;
wherein the contact face of the first interconnector is an openwork element (2) whose openwork parts are arranged homogeneously, form from 30% to 80% of the surface of the openwork element and are disposed so as to obtain a homogeneous and symmetrical distribution of the reactive gas on the electrochemical cell, the openwork element being a grid;
wherein the contact face of the second interconnector is a grooved element (4), for example a ribbed projection, adapted for distribution and/or collection of a gas.

2. The device according to claim 1, wherein the body of the chamber includes a casing (15), for example made of aluminium, delimiting an interior volume which is lined with a thermal insulator, for example a thermally insulating lining based on calcium silicate, allowing to thermally insulate the cavity from the outside of the chamber.

3. The device according to claim 2, wherein the chamber further comprises means (18) for cooling an outer wall of the casing, for example a liquid cooling circuit disposed around the casing.

4. The device according to any one of claims 1 to 3, wherein the window of the cover is made of graphite.

5. The device according to any one of claims 1 to 4, further comprising means (23) for adjusting the distance between the first interconnector and the cover, designed to bring the cell closer to or further away from the cover by relative translational movement along a central axis.

6. The device according to claim 5, wherein the means for adjusting the distance is a threaded element for supporting the cell in the cavity of the chamber and which cooperates with the casing of the chamber so that a rotation of the threaded element about the central axis results in a translation of the cell towards or further away from the cover.

7. A system for analysing, by diffraction of an X-ray beam from the first electrode of an electrochemical cell under current and at an operating temperature at least equal to 450°C, said system comprising a holding device as described in any one of claims 1 to 6, an X-ray source for emitting an X-ray beam and an X-ray detector (31) for collecting the beam diffracted from the first electrode, the source being positioned so that an X-ray beam emitted from the source can pass through the window of the cover of the holding device and reach the first electrode of the electrochemical cell and the detector being positioned so as to detect an X-ray beam diffracted by the first electrode.

8. The system according to claim 7, further comprising means (26) for adjusting the position of the holding device relative to the X-ray source and the detector.

9. The system according to claim 8, wherein the means for adjusting the position of the device are a goniometer, the holding device being positioned on the sample holder of the goniometer.

10. A method for analysing, by diffraction of an X-ray beam, a first electrode of an electrochemical cell in operation using a system according to any one of claims 7 to 9, said method comprising the steps of:
- placing the elementary cell between the first and second interconnectors, the first electrode of the cell being contacted with the contact face of the first interconnector and the second electrode of the cell being contacted with the contact face of the second interconnector;
- placing the stack formed by the elementary cell and the first and second interconnectors in the cavity of the confinement chamber and closing the cavity using the cover, the first interconnector being disposed facing the cover;
- supplying a reactive gas to the cell;
- heating the cell and/or the reactive gas in the cavity and maintaining it at an operating temperature of the cell, the operating temperature being at least equal to 450°C;
- adjusting the position of the first electrode of the elementary cell relative to the X-ray source and the X-ray detector;
- supplying the cell with current;
- producing a diffractogram of the first electrode.

11. The analysis method according to claim 10, further comprising, before placing the elementary cell between the first and second interconnectors, forming a first contact layer on the first electrode and a second contact layer on the second electrode, the first and second contact layers being made of an electrically conductive material and having through holes, the first and second layers respectively covering 25 to 60% of the surface of the first and second electrodes.

12. The analysis method according to claim 10 or claim 11, wherein at least the first electrode is an oxygen electrode.

13. The analysis method according to claim 11, wherein the two electrodes are oxygen electrodes and the reactive gas is air.
